# EUROPEAN PATENT APPLICATION

(11) **EP 2 110 045 A2**
(43) Date of publication of application: **21.10.2009**
(21) Application number: 09004509.7
(22) Date of filing: 28.03.2009
(51) Int. Cl.: A47B 23/04

(54) **Dual keyboard input device and movable cart having the same mounted thereon**

(30) Priority: 18.04.2008 KR 20080036336
(71) Applicant: MEDISON CO., LTD., Gangwon-do 250-875 (KR)
(72) Inventor: Song, Jung Sik, Seoul 153-807 (KR)
(74) Representative: Schmid, Wolfgang

(57) **Abstract**

Disclosed are a dual keyboard input device and a movable cart having the same mounted thereon. The movable cart includes a supporting portion, a desk formed on the supporting portion, and a dual keyboard input device reversibly mounted on the desk, and including a flat plate shaped-keyboard body, a button input part formed on a surface of the keyboard body, and a touch input part formed on another surface of the keyboard body. The movable cart may be used for loading and transporting medical instruments or electronic apparatuses, and the dual keyboard input device may simultaneously implement the touch input and keyboard button input, thereby providing convenience to a user.

## Description

### CROSS-REFERENCE TO RELATED APPLICATION

This application claims the benefit of Korean Patent Application No. 10-2008-0036336, filed on April 18, 2008, in the Korean Intellectual Property Office, the disclosure of which is incorporated herein by reference.

### BACKGROUND OF THE INVENTION

### 1. Field of the Invention

The present invention relates to a keyboard input device and a movable cart having the same mounted thereon, and more particularly, to a dual keyboard input device capable of utilizing both functions of mechanical type input and electronic type input and a movable cart having the same thereon.

### 2. Description of Related Art

There are a variety of input devices used for inputting required information. In general, as examples of the input devices, existing mechanical type keyboard input devices and electronic type keyboard input devices including a panel where prescribed or variable buttons are defined may be given. Currently, there have been developed many input devices using a panel having variable buttons defined thereon, for example, a Liquid Crystal Display (LCD) touch panel having a touch sensing layer formed therein.

Buttons, icons, and the like may be utilized for the LCD touch panel via a LCD screen, and the LCD touch panel may have merits such as various button definition and information provision using a Graphical User Interface (GUI) as used in general computers.

However, the existing mechanical type keyboard may also have merits such as easily inputting characters or numbers, and having experienced user groups being well acquainted with the existing mechanical type keyboard.

As described above, both the LCD touch panel and the mechanical type keyboard may each have their unique merits and demerits, and may also complement each other. Thus, there is a need to easily switch the LCD touch panel and the mechanical type keyboard with each other based on a complementary relation there between.

### SUMMARY OF THE INVENTION

An aspect of the present invention is to provide a keyboard input device that may easily switch the touch type input method and the mechanical type input method with each other.

An aspect of the present invention is to provide a keyboard input device that may embody a touch input part and a keyboard input part into a single body.

An aspect of the present invention is to provide a movable cart that may readily switch the touch input part and the keyboard input part with each other.

According to an aspect of the present invention, there is provided a movable cart, including: a supporting portion; a desk formed on the supporting portion; and a dual keyboard input device reversibly mounted on the desk, and including a flat plate shaped-keyboard body, a button input part formed on a surface of the keyboard body, and a touch input part formed on another surface of the keyboard body.

In this instance, the movable cart used for loading and transporting medical instruments or electronic apparatuses may additionally include a separate display apparatus. The dual keyboard input device may be connected with a separate display apparatus, notebook, measurement equipment, diagnosis equipment, and the like.

Here, the supporting portion of the movable cart may be realized as a fixed type maintaining a fixed position or a mobile type moved using a roller and the like mounted thereon, and the desk may be used for various purposes such as including the keyboard input device mounted thereon.

Also, the keyboard button input part and the touch input part may be formed on both surfaces of the keyboard input device, and the keyboard input device may be reversibly mounted on the desk, so that the surface of the keyboard input device or the other surface thereof can be selectively viewed. Accordingly, the user may easily perform touch input using the touch input part, and also perform keyboard input using the keyboard button input part by turning upside-down of the keyboard input device.

In this instance, the LCD touch panel and the existing keyboard button input part may be basically applicable, and different input methods such as touch type or mechanical type may be easily converted to each other according to user's proficiency or input convenience utilizing merits and demerits thereof. Also, both modules in which the two different input methods are respectively applied may be effectively arranged on the both surfaces of a single keyboard input device.

According to an aspect of the present invention, there is provided a dual keyboard input device, including: a flat plate-shaped body; a button input part formed on a surface of the body; and a touch input part formed on another surface of the body. In this instance, the dual keyboard input device may be applicable in various electronic apparatuses as well as the movable cart, and may be widely applicable by utilizing a mounting part serving as the desk.

### BRIEF DESCRIPTION OF THE DRAWINGS

The above and/or other aspects and advantages of the present invention will become apparent and more readily appreciated from the following detailed description, taken in conjunction with the accompanying drawings of which:
- FIG. 1: is a perspective view showing a movable cart including a keyboard input device mounted thereon according to an exemplary embodiment of the present invention;
- FIG. 2: is a perspective view illustrating a utilization example of a touch input part of the keyboard input device of FIG. 1;
- FIG. 3: is a perspective view illustrating a utilization example of a button input part of the keyboard input device of FIG. 1;
- FIG. 4: is an exploded perspective view illustrating the keyboard input device of FIG. 1;
- FIG. 5: is a perspective view illustrating a connected relationship between the keyboard input device and a desk according to another exemplary embodiment of the present invention; and
- FIG. 6: is a perspective view illustrating a connected relationship between the keyboard input device and the desk according to another exemplary embodiment of the present invention.

### DETAILED DESCRIPTION OF EXEMPLARY EMBODIMENTS

Reference will now be made in detail to exemplary embodiments of the present invention, examples of which are illustrated in the accompanying drawings, wherein like reference numerals refer to the like elements throughout. The exemplary embodiments are described below in order to explain the present invention by referring to the figures.

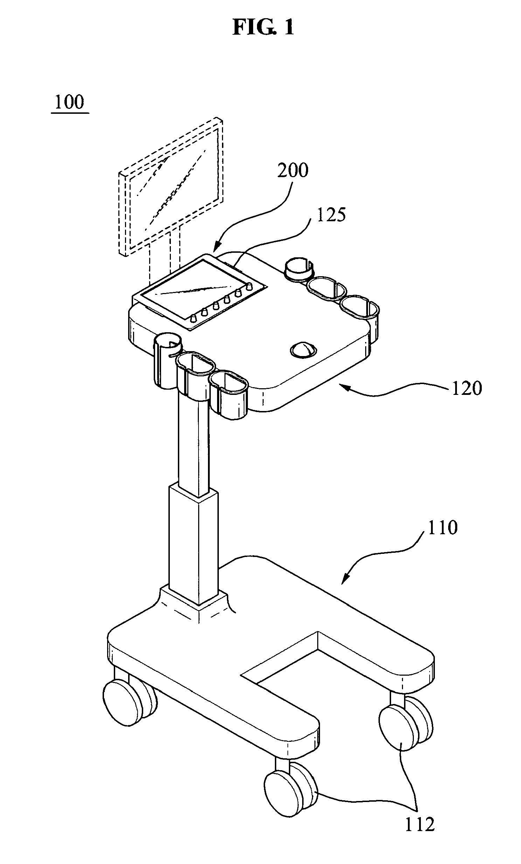

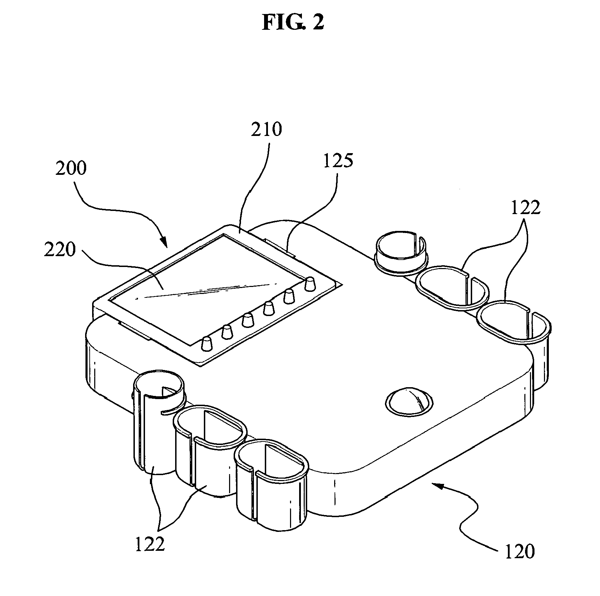

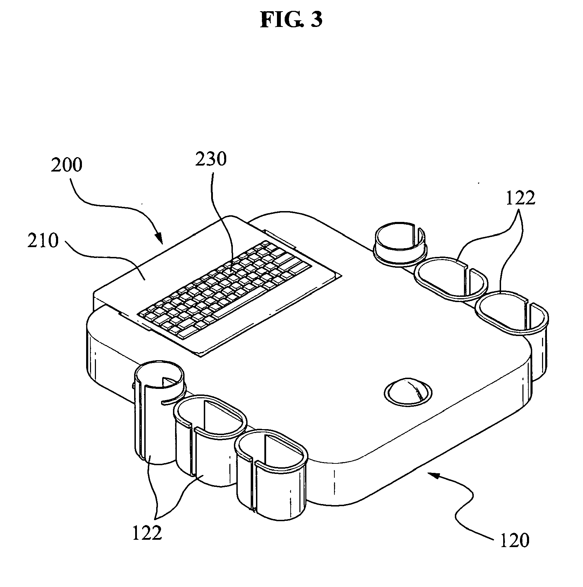

FIG. 1 is a perspective view showing a movable cart 100 including a keyboard input device 200 mounted thereon according to an exemplary embodiment of the present invention, FIG. 2 is a perspective view illustrating a utilization example of a touch input part of the keyboard input device 200 of FIG. 1, and FIG. 3 is a perspective view illustrating a utilization example of a button input part of the keyboard input device 200 of FIG. 1.

Referring to FIGS. 1 and 2, the movable cart 100 according to the present exemplary embodiment of the invention includes a supporting portion 110, a desk 120 formed on the supporting portion 110, and the dual keyboard input device 200 mounted on the desk 120. A roller 112 is mounted to a lower part of the supporting portion 110 to enable the movable cart to be moved, and the desk 120 may provide a space required for operations of the dual keyboard input device 200, or to receive other peripheral equipment.

The movable cart 100 according to the present exemplary embodiment of the invention may be applicable to medical equipments such as ultrasonic diagnosis apparatus and the like. Although not shown, a probe for ultrasonic measurement may be connected with the movable cart 100, and images sensed by the probe may be outputted via a monitor and the like. Also, a plurality of holders 122 may be formed on a peripheral surface of the desk 120, and relatively small medical equipments and containers for medical products, alcohol cotton, and the like as well as the probe may be inserted into each of the plurality of holders 122.

The dual keyboard input device 200 may be reversibly mounted to the desk 120. Specifically, the dual keyboard input device 200 may be turned upside-down. As shown in FIG. 2, a touch input part 220 is formed on a surface of the dual keyboard input device 200 utilizing Liquid Crystal Display (LCD) and touch panel techniques. As shown in FIG. 3, a keyboard button input part 230 is formed on another surface of the dual keyboard input device 200. In this instance, the keyboard button input part 230 includes buttons arranged in a QWERTY layout.

The desk includes a receiving portion 125 formed on an upper surface thereof, and the dual keyboard input device 200 is mounted to or separated from the receiving portion 125 of the desk 120 while slidingly and vertically received on the receiving portion 125. In order to use the keyboard button input part 230 while using the touch input part 220, the dual keyboard input device 200 may be separated from the receiving portion 125 of the desk 120, turned upside-down, and mounted on the receiving portion 125 in such a manner as to be slidingly moved along guide rails formed on the receiving portion 125.

The keyboard input device 200 according to the present exemplary embodiment of the invention may be connected with an external device via a cable in a wired manner, however, may be connected with the external device using Wireless-Fidelity (WiFi), Bluetooth, and the like in a wireless manner, as necessary. Also, the supporting portion 110 or the desk 120 may be connected with a controller, and the dual keyboard input device may be electrically connected with a terminal formed on the receiving portion while mounting the dual keyboard input device on the desk.

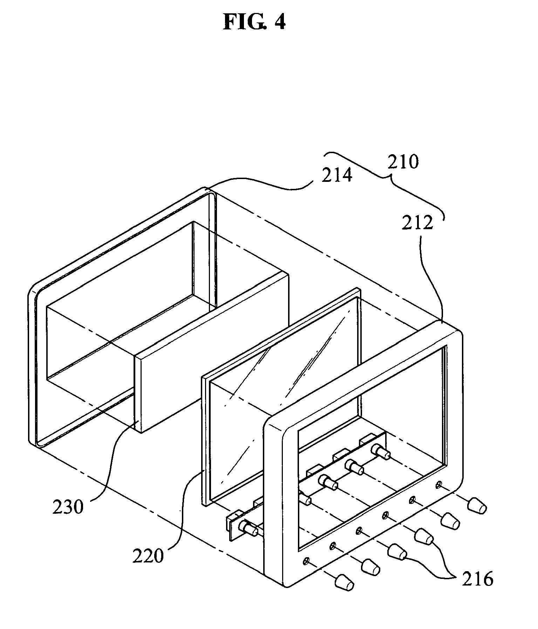

FIG. 4 is an exploded perspective view illustrating the keyboard input device of FIG. 1.

Referring to FIG. 4, the dual keyboard input device 200 includes a flat plate-shaped body 210. The flat plate-shaped body 210 is comprised of an upper case 212 and a lower case 214. The touch input part 220 and the keyboard button input part 230 may be integrally formed by the upper and lower cases 212 and 214. The touch input part 220 or a plurality of knobs 216 that regulates other functions may be mounted on the upper case 212.

The touch input part 220 may include an existing LCD panel, and a touch sensing layer used for touch input may be formed on an upper surface of the LCD panel. The keyboard button input part 230 may be formed on a rear surface of the touch input part 220. The keyboard button input part 230 may have a button arrangement arranged in the QWERTY layout used in the conventional computer. However, as necessary, a keyboard having a button arrangement rearranged or selected according to user's needs may be used for the keyboard button input part 230.

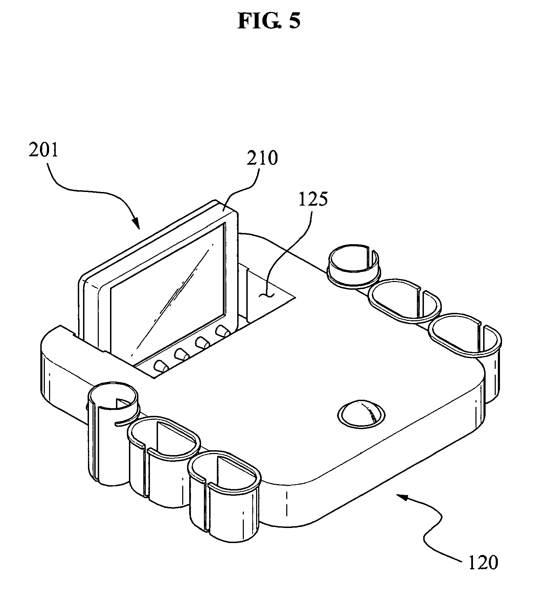

FIG. 5 is a perspective view illustrating a connected relationship between the keyboard input device and a desk according to another exemplary embodiment of the present invention.

Referring to FIG. 5, the flat plate-shaped body 210 of the dual keyboard input device 201 is rotatably mounted on the receiving portion 125 of the desk 120. For this purpose, the receiving portion 125 may include a curved part of a circular arc shape formed thereon to enable the dual keyboard input device 201 to be readily rotated. As a result, the touch input part and the button input part may be easily converted to each other by means of the rotation without mounting or separating the dual keyboard input device to/from the receiving portion due to the slidable movement.

Although not shown, a coupling means such as a hinge, pivot, and the like may be provided between the flat plate-shaped body 210 and the receiving portion 125, and the flat plate-shaped body 210 may be fixedly mounted on the desk 120 by means of the coupling means.

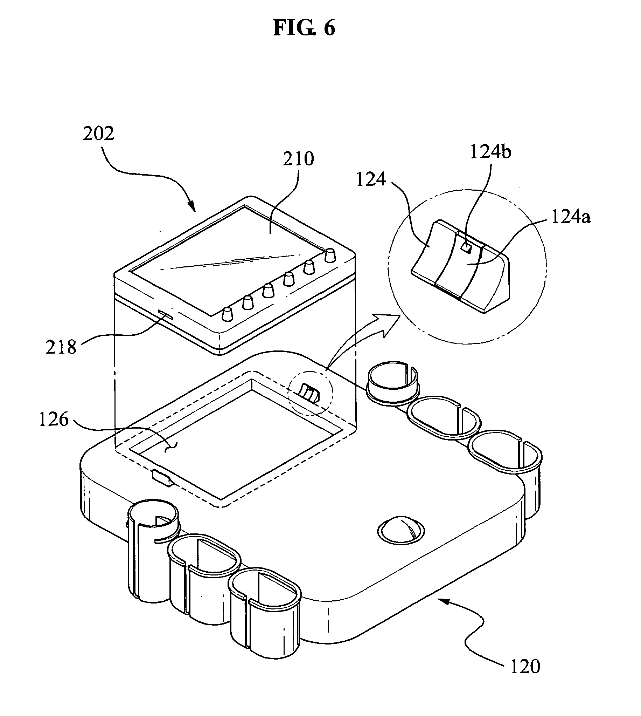

FIG. 6 is a perspective view illustrating a connected relationship between the keyboard input device and the desk according to another exemplary embodiment of the present invention.

Referring to FIG. 6, a dual keyboard input device 202 is mounted on an upper surface of the desk 120, and the desk 120 includes a latching member 124 formed thereon and coupled with the flat plate-shaped body 210 of the dual keyboard input device 202. The latching member 124 may include a plate spring 124a having a protrusion 124b formed thereon. In this instance, the plate spring is elastically deformed to be coupled with the keyboard input device 202.

The desk 120 may include a receiving portion 126 formed on an upper surface thereof to maintain a predetermined distance with the buttons of the keyboard button input part. In this instance, the receiving portion 126 may be formed into a shape in conformity to the buttons of the keyboard button input part, knob, and the like.

As described above, the movable cart and keyboard input device according to the present invention may embody the touch input part such as the LCD touch panel and the button input part such as a QWERTY keyboard into a single body, so that the button and touch input methods are simultaneously provided to the user, thereby respectively compensating for demerits and complementing merits of each other. As a result, the user may select either the touch input part or the button input part according to a user's proficiency or input convenience.

Also, the movable cart and keyboard input device according to the present invention may embody the touch input part and the keyboard input part into a single body, so that both functions of touch input and keyboard input are utilized, thereby effectively using a space. According to the prior art, two separate devices are required to be connected with a controller to implement both input methods, and respective devices may occupy a space required for operations and storage, thereby incurring limitations of space utilization.

However, the keyboard input device according to the present invention may occupy a relatively smaller space required for the operations and storage.

Although a few exemplary embodiments of the present invention have been shown and described, the present invention is not limited to the described exemplary embodiments. Instead, it would be appreciated by those skilled in the art that changes may be made to these exemplary embodiments without departing from the principles and spirit of the invention, the scope of which is defined by the claims and their equivalents.

## Claims

1. A movable cart, comprising:
a supporting portion;
a desk formed on the supporting portion; and
a dual keyboard input device reversibly mounted on the desk, and including a flat plate shaped-keyboard body, a button input part formed on a surface of the keyboard body, and a touch input part formed on another surface of the keyboard body.

2. The movable cart of claim 1, wherein the desk further includes a receiving portion which receives the keyboard input device thereon.

3. The movable cart of claim 2, wherein the dual keyboard input device is mounted to or separated from the desk while slidingly moving on the receiving portion, and is reversibly mounted on the desk.

4. The movable cart of claim 2, wherein the dual keyboard input device is reversibly mounted on the desk in such a manner as to be rotatably mounted on the receiving portion.

5. The movable cart of claim 2, wherein the receiving portion is formed on an upper surface of the desk, and includes a plurality of latching members formed on a peripheral surface of the receiving portion for restricting movement of the dual keyboard input device, and a plurality of latched grooves formed on the receiving portion in such a manner as to correspond to the plurality of latching members.

6. The movable cart of claim 5, wherein each of the plurality of latching members includes a plate spring having a protrusion formed thereon, the protrusion being inserted in each of the plurality of the latching grooves.

7. The movable cart of claim 1, wherein the button input part includes mechanical type buttons arranged in a QWERTY layout.

8. The movable cart of clam 1, wherein the touch input part includes a flat plate-shaped display panel enabling a touch input.

9. A dual keyboard input device, comprising:
a flat plate-shaped body;
a button input part formed on a surface of the body; and
a touch input part formed on another surface of the body.

10. The dual keyboard input device of claim 9, wherein the button input part includes mechanical type buttons arranged in a QWERTY layout.

11. The dual keyboard input device of claim 9, wherein the touch input part includes a flat plate-shaped display panel enabling a touch input.
